# EUROPÄISCHE PATENTSCHRIFT

(11) **EP 1 566 490 B1**
(45) Veröffentlichungstag und Bekanntmachung des Hinweises auf die Patenterteilung: **25.06.2008**
(21) Anmeldenummer: 05450035.0
(22) Anmeldetag: 23.02.2005
(51) Int. Cl.: E02F 3/36, F16L 37/62, F16L 29/04

(54) **Anordnung zum Verbinden von Energieleitungen, insbesondere Druckleitungen**
Arrangement for connecting energy conduits, particularly pressure conduits
Arrangement pour raccorder des conduites d'énergie, notamment des conduites de pression

(30) Priorität: 23.02.2004 AT 12704 U
(43) Veröffentlichungstag der Anmeldung: 24.08.2005
(73) Patentinhaber: WIMMER, Alois, 5322 Hof bei Salzburg (AT)
(72) Erfinder: Wimmer, Alois, 5322 Hof bei Salzburg (AT); Greisberger, Erich, Ing., 5303 Thalgau (AT)
(74) Vertreter: Itze, Peter

(56) Entgegenhaltungen:
- EP-A- 0 393 331
- EP-A- 0 963 688
- EP-A- 0 976 962
- EP-A- 1 329 559
- EP-A- 1 388 616
- EP-A- 1 473 415
- FR-A- 2 854 415
- US-B1- 6 196 595

## Beschreibung

Die Erfindung bezieht sich auf eine Anordnung zum Verbinden von Energieleitungen, insbesondere Druckleitungen, wie z.B. Hydraulikleitungen, von mit Energie zu versorgenden Werkzeugen, insbesondere zum Verbinden von druckbetätigten Werkzeugen mit Druckversorgungsleitungen, wobei die Werkzeuge an dem Werkzeugträger ortsfest verriegelt festlegbar sind, und wobei am Werkzeug und am Werkzeugträger im gegeneinander festgelegten Zustand koaxial gegenüberliegend wenigstens je ein Kupplungsteil vorgesehen sind, von denen im gekuppelten Zustand ein Kupplungsteil in den gegenüberliegenden Gegenkupplungsteil eingreift, und wobei einer der beiden Kupplungsteile eine in axialer Richtung des Kupplungsteiles dicht verschiebbar geführte Kupplungshülse aufweist, die in den gegenüberliegenden Kupplungsteil dichtend einschiebbar bzw. auf diesen aufschiebbar ist, wobei die Kupplungshülse einen umlaufenden gegenüber dem die Kupplungshülse führenden Zylinder abdichtenden Führungsring aufweist, der den Zylinderinnenraum in zwei ringförmige Kammern teilt, und wobei an jedem Ende der Kammer je ein Druckanschluss vorgesehen ist.

Es ist bereits bekannt, Werkzeuge an einen Werkzeugträger mittels automatisch arbeitender Kupplungseinrichtungen festzulegen, wobei eine Hakenverbindung vorgesehen ist, die zu einem ersten Verbinden der beiden Teile und zum Einrichten des Werkzeuges im Bezug auf den Werkzeugträger dient und eine formschlüssige Verbindung vorgesehen ist, die dann das Werkzeug am Werkzeugträger ortsfest verriegelt. Bei diesen bekannten Ausbildungen ist es dann vielfach erforderlich, daß Hydraulikleitungen,die zur Betätigung des Werkzeuges erforderlich sind, bzw. auch elektrische Leitungen falls das Werkzeug mit elektrischer Energie zu versorgen ist, händisch zu kuppeln sind bzw. sind auch bereits Kupplungsblöcke bekannt, die jedoch den Nachteil haben, daß Werkzeug und Werkzeugträger bereits so genau zueinander ausgerichtet sein müssen, daß die entsprechenden Kupplungsteile genau zusammenpassen. Dies ist jedoch insbesondere bei Baumaschinen oder dergleichen im rauhen Alltagsbetrieb schwer möglich, sodaß es vielfach zu Beschädigungen der Kupplungsteile der Leitungen führt. Auch führen vielfach die beiden miteinander zu kuppelnden Teile der Druckleitungen bzw. Energieversorgungsleitungen zueinander keine geradlinige koaxiale Bewegung sondern eine Schwenkbewegung aus, was das Einrichten der einzelnen Teile zueinander zusätzlich erschwert.

Aus der EP 0393 331 A1 ist eine Kupplungseinrichtung der eingangs genannten Art bekannt. Bei dieser Ausbildung wird die Kupplungshülse bei Beaufschlagung der Fluidleitung durch den dadurch bewirkten Druck in Richtung des Gegenstückes vorgeschoben, wobei es sich bei dem Gegenstück um ein rotierendes Werkzeug einer Werkzeugmaschine handelt, welches mit einer zentralen Bohrung zum Durchleiten des als Kühlung wirkenden Fluids versehen ist. Bei Abstellen des Fluidstromes und damit Erniedrigen des Druckes wird die Kupplungshülse durch eine Rückstellfeder aus dem Gegenstück zurückgezogen. Die Steuerung der Bewegung der Kupplungshülse erfolgt also lediglich durch den Fluidstrom selbst. Dies hat den Nachteil, daß eine vom Fluidstrom unabhängige Steuerung der Bewegung der Kupplungshülse nicht möglich ist.

Ferner ist aus der EP 1 473 415 A1 eine Kupplungseinrichtung der eingangs genannten Art bekannt. Dieses Dokument gehört zum Stand der Technik nach Art 54(3) EPÜ.

Der Erfindung liegt die Aufgabe zu Grunde eine Anordnung der eingangs genannten Art so zu verbessern, daß die vorstehend genannten Nachteile vermieden sind, wobei eine gesteuerte Bewegung und Festlegung der Kupplungshülse auch ohne Druck in der Fluidleitung möglich ist.

Erfindungsgemäß wird dies dadurch erreicht, daß zur Verschiebung der Kupplungshülse ein gesondert beaufschlagbarer hydraulischer Steuerkreis vorgesehen ist. Damit ist es möglich, das Anbringen und Verriegeln der Werkzeuge am Werkzeugträger unabhängig von der Kupplung der Energieversorgungsleitungen durchzuführen, da zunächst die ortsfeste Verriegelung der Werkzeuge am Werkzeugträger ausgeführt werden kann und erst danach, wenn bereits alle Teile ortsfest in Position gehalten sind, das Kuppeln der Energieversorgungsleitungen gesteuert auch ohne Druck in den zu verbindenen Leitungen erfolgt.

Erfindungsgemäß ist wenigstens einer der Kupplungsteile an seinem Träger schwimmend, jedoch in Axialrichtung beschränkt bewegbar, gelagert, wodurch erreicht wird, daß sich die Kupplungshülse am Gegenkupplungsteil ausrichten kann, ohne durch eine Zwangsführung an einer Axialbewegung behindert zu sein. Um die Kupplungshülse in ihrer vorgeschobenen, gekuppelten Position selbsttätig halten zu können, kann in dem die Kupplungshülse beaufschlagenden Hydraulikkreis, insbesondere in der auf der Rückseite des Kolbens einmündenden Leitung, ein entsperrbares Rückschlagventil vorgesehen sein. Damit wird der auf der Rückseite des Kolbens aufgebrachte Druck selbsttätig gehalten, ohne das zusätzliche Hydraulikflüssigkeit im gesamten System unter Druck gehalten werden muß. Zum Lösen der Kupplung ist das Rückschlagventil entsperrbar, womit der Rückfluß von Hydrauliköl bei Zurückbewegen des Kupplungsteiles frei gegeben ist. Wie schon eingangs angeführt, kann die verschiebbar geführte Kupplungshülse als elektrischer Verbindungskontakt und der gegenüberliegende Teil als Gegenkontakt ausgebildet sein.

In der Zeichnung ist ein Ausführungsbeispiel des Erfindungsgegenstandes dargestellt.

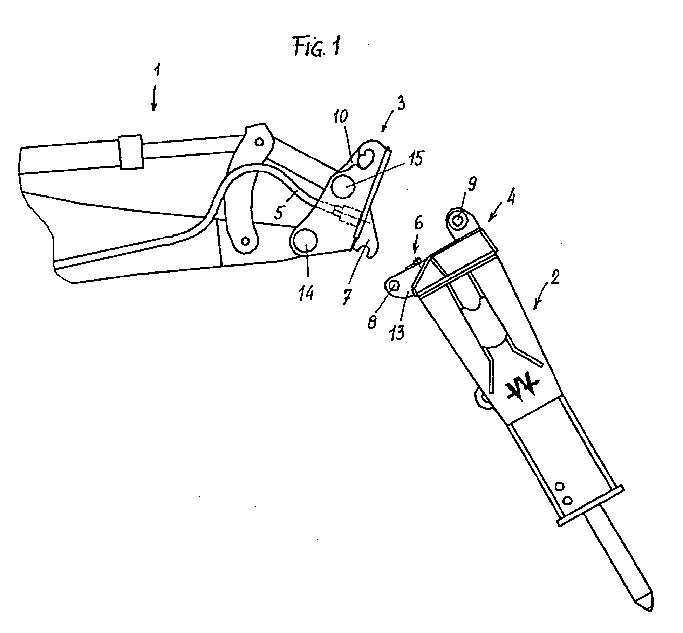

Fig. 1 zeigt allgemein in Seitenansicht ein hydraulisch beaufschlagbares Werkzeug, sowie das den Werkzeugträger aufweisende Ende eines Baggerauslegers.

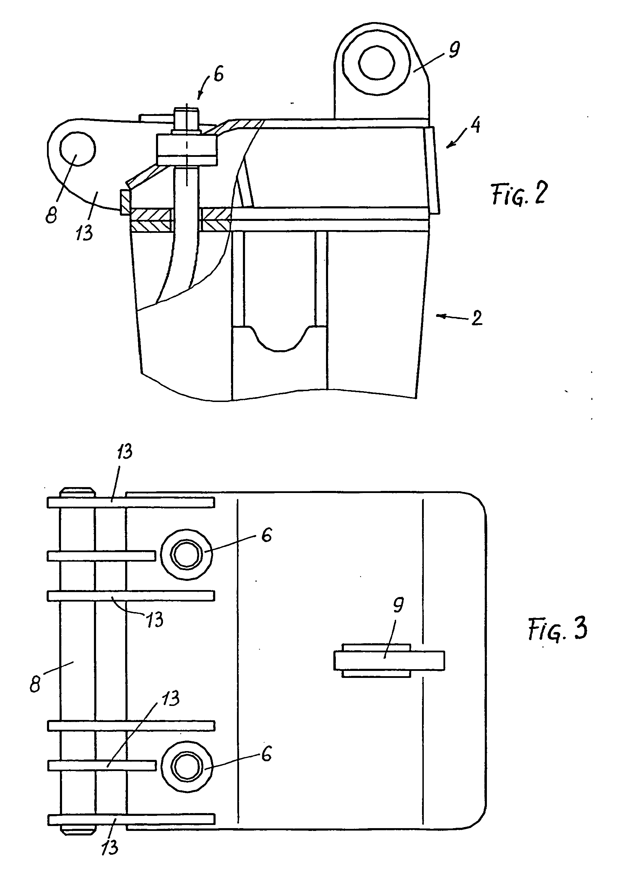

Fig. 2 ist eine Seitenansicht des Verbindungsstückes des Werkzeuges.

Fig. 3 ist eine Draufsicht auf diesen Teil.

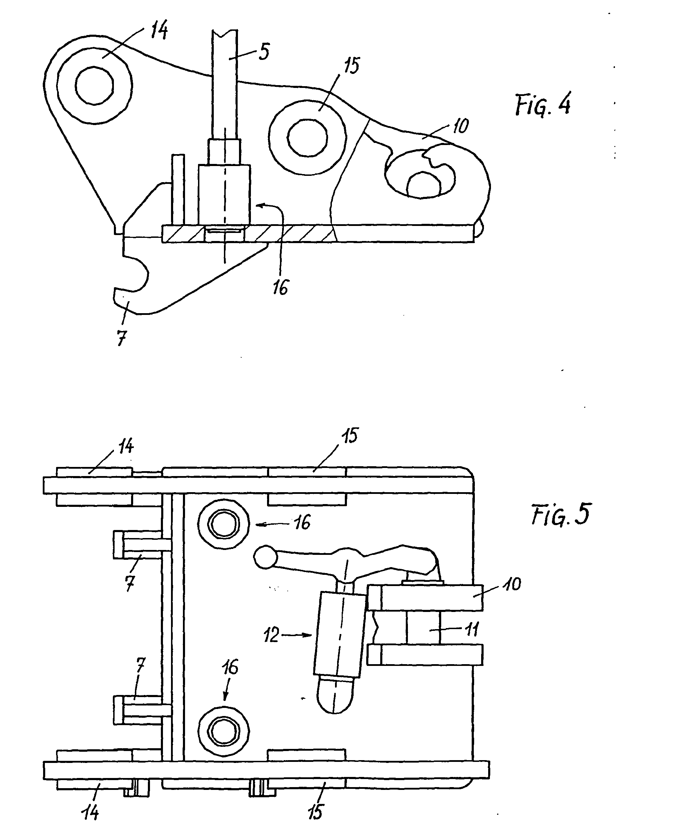

Fig. 4 gibt den Werkzeugträger in Seitenansicht teilweise geschnitten wieder.

Fig. 5 ist eine Draufsicht auf diesen Werkzeugträger.

Fig. 6 gibt im Schnitt die hydraulische Kupplung zwischen der Druckleitung und dem Werkzeug bei von einander getrennten Kupplungsteilen wieder.

Fig. 7 zeigt die in Fig.6 wiedergegebenen Teile im gekuppelten Zustand. Die

Fig. 8 veranschaulicht eine Ausführungsvariante des Hydraulikschaltkreises für die Betätigung der Kupplung für die Energieleitungen.

Mit 1 ist das Ende eines Baggerauslegers bezeichnet, an welchem ein hydraulisch betriebenes Werkzeug 2, vorliegend ein Abbruch- oder Schrämmhammer, über einen Werkzeugträger 3 und eine Kupplungsplatte 4 verbunden wird. Mit 5 ist die Hydraulikzuleitung am Werkzeugträger 3 und mit 6 der Gegenkupplungsteil am Werkzeug bezeichnet.

Zur Verbindung des Werkzeugträgers mit dem Werkzeug ist am Werkzeugträgerkupplungsteil 3 ein Haken 7 vorgesehen, der an einem Stab 8 einhakbar ist, welcher über einen Träger 13 an der Wcrkzeugkupplungsplatte 4 angebracht ist. Letztere weist an dem dem Stab 8 abgewandten Bereich eine in Richtung zur Werkzeugträgerkupplungsplatte 3 abragende Öse 9 auf, welche zwischen zwei Führungsösen 10 einschiebbar ist und so ausgerichtet ist, daß die Öffnungen der Ösen 9, 10 in Kupplungsposition fluchten. Sobald das Fluchten erreicht ist, wird ein Kupplungsbolzen 11 mittels eines Verriegelungszylinders 12 durch die Bohrungen der Ösen 9, 10 eingeschoben, womit das Werkzeug am Werkzeugträger verriegelt festgelegt ist. Der Werkzeugträgerkupplungsteil 3 ist dabei über Verbindungen 14, 15 mit dem freien Ende des Baggerauslegers 1 verbunden.

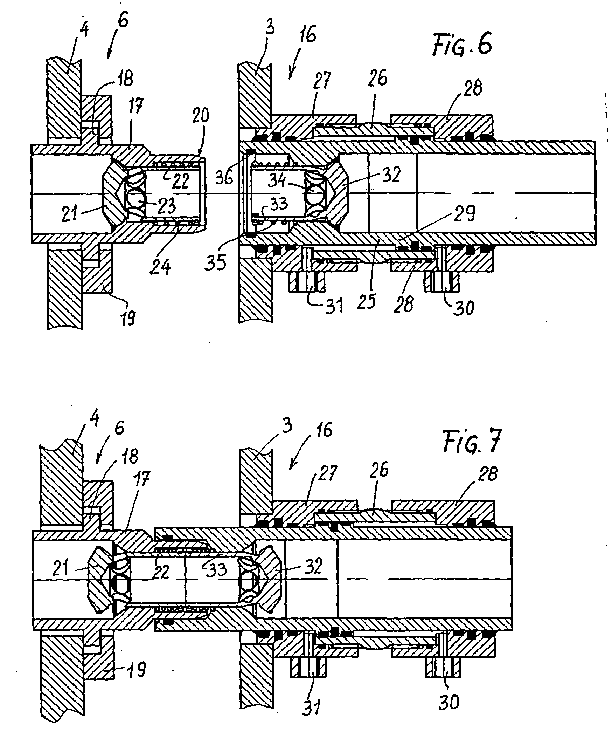

Im diesen verbundenen Zustand liegt der an die Hydraulikleitung 5 angeschlossene Kupplungsteil 16 dem Gegenkupplungsteil 6 am Werkzeug koaxial gegenüber. Diese Lage ist im Detail in Fig. 6 wiedergegeben.

Der Gegenkupplungsteil 6 ist vorliegend durch einen starren Rohrteil 17 gebildet, der über einen Flansch 18 an der Werkzeugkupplungsplatte 4 anliegt und mittels eines Ringes 19 an der Werkzeugkupplungsplatte 4 festgelegt ist. Wie aus Fig. 6 ersichtlich, liegt sowohl der Rohrteil 17 als auch der Flansch 18 in der Werkzeugkupplungsplatte 4 bzw. im Ring 19, wobei der Rohrteil 17 bzw. der Flansch 18 mittels des Ringes 19 in axialer Richtung unverschiebbar ist. Dies führt dazu, daß der Rohrteil 17 in der Kupplungsplatte 4 in radialer Richtung begrenzt seitlich verschiebbar ist, in axialer Richtung jedoch festgelegt ist, und damit bei der Betätigung der Kupplung zwar seitlich nicht jedoch in axialer Richtung ausweichen kann. Der Rohrteil 17 ist dabei an seinem freien nach außen weisenden Ende bei 20 konisch abgeschrägt.

Im Inneren des Rohrteiles 17 ist ein Ventilpfropfen 21 vorgesehen, welcher über einen Kragen 22 in das Rohrteil 17 geführt ist. Für den Durchtritt des Druckmediums sind in dem Ventilpfropfendurchgangsöffnungen 23 vorgesehen. Um sicherzustellen, daß das Ventil 21 zuverlässig schließt, ist eine Schraubenfeder 24 angebracht. Der Ventilpfropfen 21 weist dabei eine konische Ventildichtfläche auf, die auf eine Gegenfläche im Rohrteil 17 in Anlage bringbar ist. Derartige selbstschließende Ventile in Leitungskupplungsteilen sind allgemeiner Stand der Technik.

Bei dem an die Leitung 5 angeschlossenen Kupplungsteil 16 ist eine Kupplungshülse 25 vorgesehen, die in axialer Richtung verschiebbar in einem Zylinder 26 geführt ist. Der Zylinder 26 ist dabei über Befestigungsringe 27,28 mit dem Werkzeugträgerkupplungsteil 3 fest verbunden.

Die Führung der Kupplungshülse 25 im Zylinder erfolgt über einen umlaufenden Führungsring 29, der gegenüber der Zylinderwand abgedichtet ist. Der Ring 29 unterteilt damit den Zylinderinnenraum in zwei ringförmige Kammern, wobei an jedem Ende der Kammer je ein Druckanschluß 30,31 vorgesehen ist. Im Inneren der Führungshülse 25 ist analog zum Ende des Rohres 17 ebenfalls ein Ventilpfropfen 32 vorgesehen, der über einen Kragen 33 in der Ventilhülsc geführt ist und Durchgangsöffnungen 34 aufweist. Auch dieser Pfropfen 32 ist über eine Feder 35 in Richtung des Abschließens der Druckleitung belastet. An die Führungshülse 25 ist an der dem Ventilpfropfen abgewandte Seite die Druckleitung 5 dicht angeschlossen.

Im vorliegenden Ausführungsbeispiel wird durch Einbringung vom Druckmedium über den Druckanschluß 30 die Führungshülse 25 aus der in Fig. 6 wiedergegebenen Lage zu dem Rohrteil 17 hin vorgeschoben und über das konische Ende 20 auf den zylindrischen Bereich des Rohres 17 aufgeschoben, wobei eine Dichtung 36 innerhalb der Kupplungshülse einen dichten Abschluß gegenüber der Außenwandung des zylindrischen Endbereiches des Rohres 17 bewirkt. Aufgrund der konischen Ausbildung des Endes des Rohres 17 und der leicht trichterförmigen Anschrägung der Hülse 25, erfolgt ein gegenseitiges Zentrieren der beiden zu verbindenden Leitungen, wobei der Rohrteil 17, wie schon erwähnt, seitlich so weit ausweichen kann, daß hier eine koaxiale Lage der zu verbindenden Leitungsteile erzielt wird.

Wie aus Fig. 7 ersichtlich, ist die Kupplungshülse 25 auf den zylindrischen Teil des Rohres 17 vollständig aufgeschoben, wobei in dieser Lage die beiden Führungskragen 22,33 der Ventilpfropfen 21 und 32 mit ihrer der Ventilplatte abgewandten Seite aneinanderliegen und in dieser Lage die Ventilpfropfen 21 und 32 von den entsprechenden Sitzen im Rohr 17 bzw. in der Hülse 25 für eine freien Mediumsdurchtritt abheben.

In den Figuren 6 und 7 ist dargestellt, daß die Kupplungshülse 25 außen über den Rohrteil 17 aufgeschoben wird. In gleicher Weise könnte natürlich umgekehrt die Kupplungshülse 25 so ausgebildet sein, daß sie an der Innenwandung dichtend in das Rohr 17 eingeführt werden kann. Es ist lediglich eine Dimensionierungsfrage des Außenteiles.

Zum Vorschieben der Kupplungshülse wird über den Anschluß 30 Druckmedium in das Innere des Zylinders 26 in die in Vorschubrichtung hintenliegende Kammer des Zylinders 26 eingebracht, wodurch der Flansch 28 und damit die Kupplungshülse 25 in Richtung zum Gegenkupplungsteil vorgeschoben wird. Soll die Kupplung gelöst werden, dann wird über den Teil 31 Druckmedium eingeführt, wodurch die entsprechende Rückbewegung der Kupplungshülse 25 erfolgt. Aus den Zeichnungen ist ersichtlich, daß der zylindrische Dichtbereich des Rohres 17 und damit auch der Weg, an welchem der Dichtring 36 an dem Rohr 17 anliegt, länger ist, als der Hub der beiden Ventilpfropfen 21,32, was zur Folge hat, daß beim Einkuppeln die Ventilpfropfen 21 und 32 erst von den entsprechenden Ventilsitzen abgehoben werden, sobald eine Dichtung zwischen der Kupplungshülse 25 und dem Rohr 17 über den Dichtring 36 erzielt ist. Auch beim Lösen erfolgt zuerst das Abdichten über die Ventilpropfen 21,32 und erst dann kommt es zu einem Herabgleiten der Kupplungshülse 25 von dem Kupplungsrohr des Gegenkupplungsteiles 6.

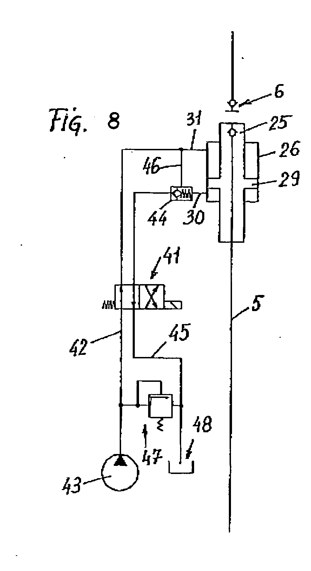

In Figur 8 ist eine Schaltungsvariante zur Beaufschlagung des Zylinders 26 für die Betätigung der Kupplungshülse 25 wiedergegeben. Es ist eine gesonderte Beaufschlagung gezeigt, wobei ein Steuerventil 41 die Betätigung der Kupplungshülse 25 im Zylinder 26 steuert, welches mittels eines Elektromagneten betätigt wird. Das Steuerventil 41 ist mit einer Druckzuleitung 42 und einer Rückleitung 45 versehen, wobei für die Druckerzeugung eine Pumpe 43 an die Steuerleitung 42 angeschlossen ist. In die Rückstromleitung ist ein entsperrbares Rückschlagventil 44 eingebaut, welches über die Leitung 46 entsperrt werden kann. Mit 47 ist eine Bypassschaltung zur Vermeidung von Überdrücken in der Leitung 42 vorgesehen. 48 ist das Rücklaufgefäß aus der Leitung 45.

Wird mittels des Elektromagneten entgegen einer Federkraft das Steuerventil 41 von der in Figur 8 wiedergegebenen Stellung in die zweite Stellung verschoben, in welcher Druck aus der Leitung 42 über das entsperrbare Rückschlagventil 44 und den Druckanschluß 30 in den in Vorschubrichtung der Kupplungshülse 25 hintenliegenden Zylinderraum eindringt, dann wird dadurch die Kupplungshülse 25 in Richtung des Gegenkupplungsteiles 6 vorgeschoben. In dieser Lage bleibt bei der Stellung des Ventils 41 die Kupplungshülse 25 selbsttätig aufgrund des Druckes hinter dem Kolben 29 fest in der gekuppelten Lage. Zum Zurückziehen der Kupplungshülse 25 wird dann der Elektromagnet abgeschaltet, dann gelangt durch die Federkraft das Steuerventil 41 in die in Figur 8 wiedergegebene Stellung. Damit wird die in Vorschubrichtung vorne liegende Zylinderkammer über den Anschluß 31 druckbeaufschlagt, wobei über die Leitung 46 das entsperrbare Rückschlagventil 44 entsperrt wird, und damit im Sinne des Zurückbewegens der Kupplungshülse 25 das Druckmedium über die Leitung 30 das Steuerventil 41 und die Leitung 45 in den Auffangraum 48 gelangen kann.

Wie angeführt, kann anstelle einer Druckleitung 5 auch eine elektrische Zuleitung vorgesehen sein.

## Patentansprüche

1. Anordnung zum Verbinden von Energieleitungen, insbesondere Druckleitungen wie z.B. Hydraulikleitungen, von mit Energie zu versorgenden Werkzeugen, insbesondere zum Verbinden von druckbetätigten Werkzeugen mit Druckversorgungsleitungen, wobei die Werkzeuge an dem Werkzeugträger ortsfest verriegelt festlegbar sind, und wobei am Werkzeug und am Werkzeugträger im gegeneinander festgelegten Zustand koaxial gegenüberliegend wenigstens je ein Kupplungsteil vorgesehen ist, von denen im gekuppelten Zustand ein Kupplungsteil in den gegenüberliegenden Gegenkupplungsteil ergreift, wobei einer der beiden Kupplungsteile (6,25) eine in axialer Richtung des Kupplungsteiles dicht verschiebbar geführte Kupplungshülse (25) aufweist, die in den gegenüberliegenden Kupplungsteil (6) dichtend einschiebbar bzw. auf diesen aufschiebbar ist, wobei die Kupplungshülse (25) einen umlaufenden, gegenüber einem die Kupplungshülse (25) führenden Zylinder (26) abdichtenden Führungsring (29) aufweist, der den Zylinderinnenraum in zwei ringförmige Kammern teilt, wobei an jedem Ende der Kammer je ein Druckanschluss (30, 31) vorgesehen ist, wobei zur Verschiebung der Kupplungshülse (25) ein vom Anbringen und Verriegeln der Werkzeuge am Werkzeugträger unabhängig beaufschlagbarer gesonderter hydraulischer Steuerkreis (40-46) vorgesehen ist und wobei wenigstens einer der Kupplungsteile (6,25) an seinem Träger schwimmend, jedoch in Axialrichtung beschränkt bewegbar, gelagert ist.

2. Anordnung nach Anspruch 1, **dadurch gekennzeichnet, daß** in dem die Kupplungshülse (25) beaufschlagenden Hydraulikkreis, insbesondere in der auf der Rückseite des Kolbens (29) einmündenden Leitung, ein entsperrbares Rückschlagventil (44) vorgesehen ist.

3. Anordnung nach Anspruch 1 oder 2, **dadurch gekennzeichnet, daß** die verschiebbar geführte Kupplungshülse (25) als elektrischer Verbindungskontakt und der gegenüberliegende Teil als Gegenkontakt ausgebildet sind.

## Claims

1. Arrangement for connecting energy-carrying lines, and in particular pressure-carrying lines such for example as hydraulic lines, of tools which are to be supplied with energy, and in particular for connecting pressure-operated tools to lines for supplying pressure, the tools being able to be secured to the tool-carrier in a fixed, locked position and there being provided on the tool and on the tool-carrier at least one coupling member, which coupling members, in the state in which they are secured relative to one another, are situated co-axially opposite one another, and of which coupling members one engages in the mating coupling member situated opposite when they are in the coupled state, wherein one of the two coupling members (6, 25) has a coupling sleeve (25) which is guided to be displaceable, in a sealed state, in the axial direction of the coupling member and which is able to be slid into or onto the coupling member (6) situated opposite with a seal, wherein the coupling sleeve (25) has a surrounding guiding annulus (29) which is sealed against a cylinder (26), which cylinder (26) guides the coupling sleeve (25) and which annulus divides the space within the cylinder into two annular chambers, wherein a connection for pressure (30, 31) is provided at each end of the chamber, wherein a separate hydraulic control circuit (40-46) is provided to which force can be applied, independently of the mounting and locking of the tools on and to the tool-carrier, to displace the coupling sleeve (25), and wherein at least one of the coupling members (6, 25) is mounted on its carrier to float but to be movable to a limited degree in the axial direction.

2. Arrangement according to claim 1, **characterised in that** an unlatchable non-return valve (44) is provided in the hydraulic circuit which applies force to the coupling sleeve (25), and in particular in the line which opens at the rear end of the piston (29).

3. Arrangement according to claim 1 or 2, **characterised in that** the coupling sleeve (25) which is guided to be displaceable takes the form of an electrical connecting contact and the member situated opposite that of a mating contact.

## Revendications

1. Dispositif destiné à raccorder des conduites d'énergie, en particulier des conduites sous pression comme par exemple des conduites hydrauliques, d'outils qu'il faut alimenter en énergie, en particulier destiné à raccorder des outils actionnés par pression à des conduites d'alimentation en pression, les outils étant susceptibles d'être montés et verrouillés de façon fixe sur le porte-outil et au moins respectivement un élément d'accouplement étant prévu, sur l'outil et le porte-outil, fixés en regard l'un de l'autre, de façon coxialement opposée, dont un élément d'accouplement, à l'état accouplé, s'engageant dans l'élément d'accouplement opposé, l'un des deux éléments d'accouplement (6, 25) présentant une douille d'accouplement (25) montée déplaçable de façon étanche dans la direction axiale de l'élément d'accouplement, douille qui, de façon étanche, peut être introduite dans ou appliquée sur l'élément d'accouplement (6) situé en regard, la douille d'accouplement (25) présentant une bague de guidage (29) périphérique, assurant l'étanchéité vis-à-vis d'un cylindre (26) guidant la douille d'accouplement (25), bague qui partage l'espace intérieur du cylindre en deux chambres annulaires, respectivement un raccord de conduite sous pression (30, 31) étant prévu à chaque extrémité de la chambre, un circuit de commande hydraulique (40-46) séparé, susceptible d'être actionné indépendamment de l'application et du verrouillage des outils sur le porte-outils étant prévu pour déplacer la douille d'accouplement (25), et au moins l'un des éléments d'accouplement (6, 25) étant monté flottant sur son support, avec cependant une mobilité limitée dans la direction axiale.

2. Dispositif selon la revendication 1, **caractérisé en ce qu'**est prévu, dans le circuit hydraulique qui actionne la douille d'accouplement (25), en particulier dans la conduite qui débouche sur la face arrière du piston (29), une soupape anti-retour (44) susceptible d'être déverrouillée.

3. Dispositif selon la revendication 1 ou 2, **caractérisé en ce que** la douille d'accouplement (25) guidée de façon mobile est conformée en contact de raccordement électrique et **en ce que** la partie située en regard est conformée en contre-contact.
